# EUROPEAN PATENT SPECIFICATION

(11) **EP 2 687 375 B1**
(45) Date of publication and mention of the grant of the patent: **29.07.2020**
(21) Application number: 12757259.2
(22) Date of filing: 10.02.2012
(51) Int. Cl.: B32B 27/36, G02B 5/30, C08K 5/353, B32B 27/40, B32B 27/18, B32B 27/08, B32B 27/30, G02B 1/10

(54) **LAMINATED POLYESTER FILM**
LAMINIERTER POLYESTERFILM
FILM DE POLYESTER STRATIFIÉ

(30) Priority: 15.03.2011 JP 2011056092
(43) Date of publication of application: 22.01.2014
(73) Proprietor: Mitsubishi Chemical Corporation, Chiyoda-ku Tokyo 100-8251 (JP)
(72) Inventor: FUNATSU, Ryosuke, Maibara-shi Shiga 521-0234 (JP); KAWASAKI, Taishi, Maibara-shi Shiga 521-0234 (JP); FUJITA, Masato, Maibara-shi Shiga 521-0234 (JP)
(74) Representative: Ter Meer Steinmeister & Partner
(86) International application number: PCT/JP2012/053114
(87) International publication number: WO 2012/124416

(56) References cited:
- EP-A1- 2 422 977
- WO-A1-2010/001750
- WO-A1-2010/001750
- JP-A- 2011 005 846
- JP-A- 2011 031 561
- DATABASE WPI Week 201114 Thomson Scientific, London, GB; AN 2011-B61866 XP002737412, -& WO 2011/016311 A1 (TOYO BOSEKI KK) 10 February 2011 (2011-02-10)
- DATABASE WPI Week 201081 Thomson Scientific, London, GB; AN 2010-P78629 XP002737413, -& WO 2010/137562 A1 (MITSUBISHI PLASTICS INC) 2 December 2010 (2010-12-02)
- DATABASE WPI Week 201272 Thomson Scientific, London, GB; AN 2012-M98729 & JP 2012 192529 A (MITSUBISHI PLASTICS IND LTD) 11 October 2012 (2012-10-11)

## Description

### TECHNICAL FIELD

The present invention relates to a laminated polyester film, and more particularly, to a laminated polyester film which can be suitably used as a member for protecting a polarizing plate employed in liquid crystal displays.

### BACKGROUND ART

In recent years, liquid crystal displays have been extensively used as a display device for TVs, personal computers, digital cameras, cellular phones, etc. The liquid crystal displays have a construction of "front side polarizing plate//liquid crystal//rear side polarizing plate" when viewed from a display side as the front side towards its opposite side (as a backlight side). The polarizing plate used in the liquid crystal displays is usually constructed of a polarizing film in the form of a dyed monoaxially oriented polyvinyl alcohol film, and protective films, etc., attached onto the polarizing film (protective film/polarizing film/protective film). A whole construction of the liquid crystal display including a protective film A and a protective film B which are disposed on front and rear surfaces of the polarizing film constituting the front side polarizing plate as well as a protective film C and a protective film D which are disposed on front and rear surfaces of the polarizing film constituting the rear side polarizing plate is "protective film A//front side polarizing film//protective film B//liquid crystal//protective film C//rear side polarizing film//protective film D" when viewed from the front side.

As the protective films, a triacetyl cellulose film (TAC film) has been frequently used because of a high transparency and a good optical isotropy thereof. However, the TAC film tends to be deteriorated in dimensional stability and wet heat resistance, and further tends to have such a problem that the surface of the TAC film must be previously subjected to saponification treatment with an alkali solution before adhering to the polarizing film. With the recent tendency toward increase in size and quality of liquid crystal displays, there is an increasing demand for high mechanical strength of these films as well as stability thereof under high-temperature and high-humidity environmental conditions. In addition, it has been required to prevent deterioration in quality of the films owing to bleed-out of low-molecular weight materials and increased haze when subjected to the alkali treatment. Further, the alkali treatment using the alkali solution with a high-concentration tends to be undesirable in view of working safety and environmental protection.

To solve these conventional problems, various materials other than the TAC films such as norbornene-based films have been proposed (Patent Documents 1 and 2). However, these other material films using no ordinary resins are expensive owing to high production costs. In consequence, there has been proposed the method using a film of polyesters as ordinary resins which are capable of ensuring a good dimensional stability and free from the alkali treatments causing various problems, and further are advantageous in view of costs.

However, the polyester films by themselves tend to have problems such as deteriorated adhesion property to adhesives used for bonding the polarizing film and the protective film as well as poor adhesion property to a surface functional layer such as a hard coat layer and an anti-glare layer which are to be attached onto the side of the polyester film opposite to its side to be attached with the polarizing film. In order to enhance the adhesion property of the polyester film, there have been proposed the layer constructions in which an anchor layer is provided. However, in any of these conventional proposals, there are disclosed no specific embodiments, so that it may be difficult to ensure a sufficient adhesion property of the film if an unsuitable adhesive is used therefor (Patent Documents 3 to 5).

### PRIOR PART DOCUMENTS

### PATENT DOCUMENTS

Patent Document 1: Japanese Patent Application Laid-Open (KOKAI) No. 6-51117
Patent Document 2: Japanese Patent Application Laid-Open (KOKAI) No. 2006-227090
Patent Document 3: Japanese Patent Application Laid-Open (KOKAI) No. 2002-116320
Patent Document 4: Japanese Patent Application Laid-Open (KOKAI) No. 8-271733
Patent Document 5: Japanese Patent Application Laid-Open (KOKAI) No. 8-271734
   Document EP2 422 977 A1 discloses a laminated polyester film comprising a coating layer formed on a surface of the polyester film which comprises a urethane resin having a polycarbonate structure.

### SUMMARY OF THE INVENTION

### PROBLEMS TO BE SOLVED BY THE INVENTION

The present invention has been accomplished to solve the above conventional problems. An object of the present invention is to solve various problems of the TAC film, and provide a laminated polyester film which has a good adhesion property to adhesives and further has a good adhesion property to various surface functional layers to be provided on a rear side of the polyester film, and can be suitably used as a protective film for a polarizing film, in particular, a protective film for protecting a front surface of a front side polarizing plate (corresponding to the above protective film A).

### MEANS FOR SOLVING PROBLEMS

As a result of the present inventors' earnest study in view of the above problems, it has been found that these problems can be readily solved by using a laminated polyester film having a specific structure. The present invention has been attained on the basis of this finding.

That is, in an aspect of the present invention, there is provided a laminated polyester film comprising:
a polyester film and
a coating layer formed on one surface of the polyester film which is obtained by applying a coating solution which comprises a hydroxyl group-containing polycarbonate compound and an oxazoline compound onto the surface of the polyester film.

### EFFECT OF THE INVENTION

In accordance with the present invention, it is possible to provide a laminated polyester film which has a good adhesion property to adhesives used for adhering a polarizing film to the polyester film and further has a good adhesion property to various surface functional layers to be attached onto a rear side surface of the polyester film, for example, when used as a protective film for a polarizing plate, in particular, as a protective film disposed on a front surface of a front side polarizing plate. Therefore, the present invention has a high value from the industrial viewpoints.

### PREFERRED EMBODIMENTS FOR CARRYING OUT THE INVENTION

The polyester film constituting the laminated polyester film of the present invention may have either a single layer structure or a multilayer structure. Unless departing from the scope of the present invention, the polyester film may have not only a two or three layer structure but also a four or more multilayer structure, and the layer structure of the polyester film is not particularly limited.

The polyester used in the present invention may be either a homopolyester or a copolyester. The homopolyester is preferably obtained by polycondensing an aromatic dicarboxylic acid and an aliphatic glycol. Examples of the aromatic dicarboxylic acid include terephthalic acid and 2,6-naphthalenedicarboxylic acid. Examples of the aliphatic glycol include ethylene glycol, diethylene glycol and 1,4-cyclohexanedimethanol. Typical examples of the polyesters include polyethylene terephthalate or the like. On the other hand, as a dicarboxylic acid component of the copolyester, there may be mentioned at least one compound selected from the group consisting of isophthalic acid, phthalic acid, terephthalic acid, 2,6-naphthalenedicarboxylic acid, adipic acid, sebacic acid and oxycarboxylic acids (such as, for example, p-oxybenzoic acid). As a glycol component of the copolyester, there may be mentioned at least one compound selected from the group consisting of ethylene glycol, diethylene glycol, propylene glycol, butanediol, 4-cyclohexanedimethanol and neopentyl glycol.

The polyester film used in the present invention may suitably comprise an ultraviolet absorber in order to prevent a liquid crystal or the like in the liquid crystal displays from being deteriorated owing to irradiation with an ultraviolet ray. The ultraviolet absorber is not particularly limited as long as it is a compound having a capability of absorbing an ultraviolet ray and can withstand heat applied during a process for producing the polyester film.

As the ultraviolet absorber, there are generally known an organic ultraviolet absorber and an inorganic ultraviolet absorber. In view of a good transparency, among these ultraviolet absorbers, the organic ultraviolet absorber is preferred. Examples of the organic ultraviolet absorber include, but are not particularly limited to, benzotriazole-based ultraviolet absorbers, cyclic iminoester-based ultraviolet absorbers and benzophenone-based ultraviolet absorbers. Among these organic ultraviolet absorbers, benzotriazole-based ultraviolet absorbers and cyclic iminoester-based ultraviolet absorbers are preferred in view of a good durability. These ultraviolet absorbers may be used in combination of any two or more thereof.

Specific examples of the benzotriazole-based ultraviolet absorbers include, but are not particularly limited to, 2-[2'-hydroxy-5'-(methacryloyloxymethyl)phenyl]-2H-benzotriazole, 2-[2'-hydroxy-5'-(methacryloyloxyethyl)phenyl]-2H-benzotriazole, 2-[2'-hydroxy-5'-(methacryloyloxypropyl)phenyl]-2H-benzotriazole, 2-[2'-hydroxy-5'-(methacryloyloxyhexyl)phenyl]-2H-benzotriazole, 2-[2'-hydroxy-3'-tert-butyl-5'-(methacryloyloxyethyl)phenyl]-2H-benzotriazole, 2-[2'-hydroxy-5'-tert-butyl-3'-(methacryloyloxyethyl)phenyl]-2H-benzotriazole, 2-[2'-hydroxy-5'-(methacryloyloxyethyl)phenyl]-5-chloro-2H-benzotriazole, 2-[2'-hydroxy-5'-(methacryloyloxyethyl)phenyl]-5-methoxy-2H-benzotriazole, 2-[2'-hydroxy-5'-(methacryloyloxyethyl)phenyl]-5-cyano-2H-benzotriazole, 2-[2'-hydroxy-5'-(methacryloyloxyethyl)phenyl]-5-tert-butyl-2H-benzotriazole and 2-[2'-hydroxy-5'-(methacryloyloxyethyl)phenyl]-5-nitro-2H-benzotriazole.

Specific examples of the cyclic iminoester-based ultraviolet absorbers include, but are not particularly limited to, 2-methyl-3,1-benzoxazin-4-one, 2-butyl-3,1-benzoxazin-4-one, 2-phenyl-3,1-benzoxazin-4-one, 2-(1- or 2-naphthyl)-3,1-benzoxazin-4-one, 2-(4-biphenyl)-3,1-benzoxazin-4-one, 2-p-nitrophenyl-3,1-benzoxazin-4-one, 2-m-nitrophenyl-3,1-benzoxazin-4-one, 2-p-benzoylphenyl-3,1-benzoxazin-4-one, 2-p-methoxyphenyl-3,1-benzoxazin-4-one, 2-o-methoxyphenyl-3,1-benzoxazin-4-one, 2-cyclohexyl-3,1-benzoxazin-4-one, 2-p-(or m-)phthalimidophenyl-3,1-benzoxazin-4-one, N-phenyl-4-(3,1-benzoxazin-4-on-2-yl)phthalimide, N-benzoyl-4-(3,1-benzoxazin-4-on-2-yl)aniline, N-benzoyl-N-methyl-4-(3,1-benzoxazin-4-on-2-yl)aniline, 2-(p-(N-methylcarbonyl)phenyl-3,1-benzoxazin-4-one, 2,2'-bis(3,1-benzoxazin-4-one), 2,2'-ethylene-bis(3,1-benzoxazin-4-one), 2,2'-tetramethylene-bis(3,1-benzoxazin-4-one), 2,2'-decamethylene-bis(3,1-benzoxazin-4-one), 2,2'-p-phenylene-bis(3,1-benzoxazin-4-one), 2,2'-m-phenylene-bis(3,1-benzoxazin-4-one), 2,2'-(4,4'-diphenylene)bis(3,1-benzoxazin-4-one), 2,2'-(2,6- or 1,5-naphthylene)bis(3,1-benzoxazin-4-one), 2,2'-(2-methyl-p-phenylene)bis(3,1-benzoxazin-4-one), 2,2'-(2-nitro-p-phenylene)bis(3,1-benzoxazin-4-one), 2,2'-(2-chloro-p-phenylene)bis(3,1-benzoxazin-4-one), 2,2'-(1,4-cyclohexylene)bis(3,1-benzoxazin-4-one), 1,3,5-tri(3,1-benzoxazin-4-on-2-yl)benzene, 1,3,5-tri(3,1-benzoxazin-4-on-2-yl)naphthalene, 2,4,6-tri(3,1-benzoxazin-4-on-2-yl)naphthalene, 2,8-dimethyl-4H,6H-benzo(1,2-d; 5,4-d')bis(1,3)-oxazin-4,6-dione, 2,7-dimethyl-4H,9H-benzo(1,2-d; 4,5-d')bis(1,3)-oxazin-4,9-dione, 2,8-diphenyl-4H,8H-benzo(1,2-d; 5,4-d')bis(1,3)-oxazin-4,6-dione, 2,7-diphenyl-4H,9H-benzo(1,2-d; 4,5-d')bis(1,3)-oxazin-4,6-dione, 6,6'-bis(2-methyl-4H,3,1-benzoxazin-4-one), 6,6'-bis(2-ethyl-4H,3,1-benzoxazin-4-one), 6,6'-bis(2-phenyl-4H,3,1-benzoxazin-4-one), 6,6'-methylene-bis(2-methyl-4H,3,1-benzoxazin-4-one), 6,6'-methylene-bis(2-phenyl-4H,3,1-benzoxazin-4-one), 6,6'-ethylene-bis(2-methyl-4H,3,1-benzoxazin-4-one), 6,6'-ethylene-bis(2-phenyl-4H,3,1-benzoxazin-4-one), 6,6'-butylene-bis(2-methyl-4H,3,1-benzoxazin-4-one), 6,6'-butylene-bis(2-phenyl-4H,3,1-benzoxazin-4-one), 6,6'-oxy-bis(2-methyl-4H,3,1-benzoxazin-4-one), 6,6'-oxy-bis(2-phenyl-4H,3,1-benzoxazin-4-one), 6,6'-sulfonyl-bis(2-methyl-4H,3,1-benzoxazin-4-one), 6,6'-sulfonyl-bis(2-phenyl-4H,3,1-benzoxazin-4-one), 6,6'-carbonyl-bis(2-methyl-4H,3,1-benzoxazin-4-one), 6,6'-carbonyl-bis(2-phenyl-4H,3,1-benzoxazin-4-one), 7,7'-methylene-bis(2-methyl-4H,3,1-benzoxazin-4-one), 7,7'-methylene-bis(2-phenyl-4H,3,1-benzoxazin-4-one), 7,7'-bis(2-methyl-4H,3,1-benzoxazin-4-one), 7,7'-ethylene-bis(2-methyl-4H,3,1-benzoxazin-4-one), 7,7'-oxy-bis(2-methyl-4H,3,1-benzoxazin-4-one), 7,7'-sulfonyl-bis(2-methyl-4H,3,1-benzoxazin-4-one), 7,7'-carbonyl-bis(2-methyl-4H,3,1-benzoxazin-4-one), 6,7'-bis(2-methyl-4H,3,1-benzoxazin-4-one), 6,7'-bis(2-phenyl-4H,3,1-benzoxazin-4-one), 6,7'-methylene-bis(2-methyl-4H,3,1-benzoxazin-4-one) and 6,7'-methylene-bis(2-phenyl-4H,3,1-benzoxazin-4-one).

Among the above compounds, in view of a good hue, the benzoxazinone-based compounds are preferably used because they are hardly subjected to yellowing. Examples of the suitable benzoxazinone-based compounds include those compounds represented by the following general formula (1).

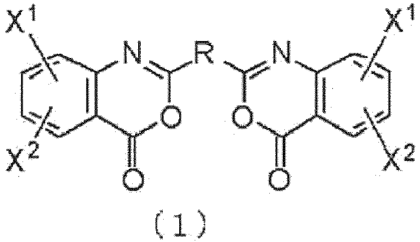

In the above general formula, R is a divalent aromatic hydrocarbon group; and X¹ and X² are each independently hydrogen or a group selected from the following functional groups, although not particularly limited thereto.

Examples of the functional groups include an alkyl group, an aryl group, a heteroaryl group, halogen, an alkoxyl group, an aryloxy group, a hydroxyl group, a carboxyl group, an ester group and a nitro group.

In the present invention, among the compounds represented by the above structural formula, 2,2'-(1,4-phenylene)bis[4H-3,1-benzoxazin-4-one] is especially preferred.

The amount of the ultraviolet absorber compounded in the laminated polyester film of the present invention is usually not more than 10.0% by weight, and preferably in the range of 0.3 to 3.0% by weight. When the amount of the ultraviolet absorber compounded is more than 10.0% by weight, the ultraviolet absorber tends to suffer from bleeding-out onto the surface of the laminated polyester film, which tends to result in deterioration in surface functionality such as deterioration in adhesion property, etc.

The film in the form of a multilayer film preferably has at least three layers. In this case, the ultraviolet absorber is preferably compounded in an intermediate layer thereof. By compounding the ultraviolet absorber in the intermediate layer, the ultraviolet absorber compound can be prevented from being bled out onto the surface of the film, so that the resulting film can well maintain its properties such as an adhesion property.

The laminated polyester film of the present invention preferably has a light transmittance of not more than 10% and more preferably not more than 5% as measured at a wavelength of 380 nm for the purpose of preventing deterioration of liquid crystal owing to irradiation with an ultraviolet ray when the laminated polyester film is used as a protective film for polarizing films.

For the purpose of mainly imparting an easy-slipping property to the film and preventing occurrence of flaws in the film during the respective steps, particles are preferably compounded in the polyester layer in the film of the present invention. The kinds of particles to be compounded in the polyester layer are not particularly limited as long as the particles are capable of imparting a good easy-slipping property to the film. Specific examples of the particles include particles of silica, calcium carbonate, magnesium carbonate, barium carbonate, calcium sulfate, calcium phosphate, magnesium phosphate, kaolin, aluminum oxide, titanium oxide, etc. In addition, there may also be used heat-resistant organic particles as described in Japanese Patent Publication (KOKOKU) No. 59-5216(1984), Japanese Patent Application Laid-Open (KOKAI) No. 59-217755(1984) or the like. Examples of the other heat-resistant organic particles include particles of thermosetting urea resins, thermosetting phenol resins, thermosetting epoxy resins, benzoguanamine resins, etc. Further, there may also be used deposited particles obtained by precipitating and finely dispersing a part of metal compounds such as a catalyst during the process for production of the polyester.

On the other hand, the shape of the particles used above is also not particularly limited, and may be any of a spherical shape, a massive shape, a bar shape, a flat shape, etc. Further, the hardness, specific gravity, color and the like of the particles are also not particularly limited. These particles may be used in combination of any two or more kinds thereof, if required.

The average particle diameter of the particles used above is usually in the range of 0.01 to 3 *µ*m and preferably 0.1 to 2 *µ*m. When the average particle diameter of the particles is less than 0.01 *µ*m, the particles may fail to impart a sufficient easy-slipping property to the polyester layer, or tend to be aggregated together and therefore exhibit a poor dispersibility, which will cause deterioration in transparency of the resulting film. On the other hand, when the average particle diameter of the particles is more than 3 *µ*m, the surface roughness of the obtained film tends to be too coarse, so that there tend to occur problems when forming functional layers thereon in the subsequent steps.

The content of the particles in the polyester layer is usually in the range of 0.0001 to 5% by weight and preferably 0.002 to 3% by weight. When the content of the particles in the polyester layer is less than 0.0001% by weight, the resulting film tends to be insufficient in easy-slipping property. On the other hand, when the content of the particles in the polyester layer is more than 5% by weight, the resulting film tends to be insufficient in transparency.

The method of adding the particles to the polyester layer is not particularly limited, and any conventionally known methods can be suitably used therefor. For example, the particles may be added at any optional stages in the process for production of the polyester forming the respective layers. The particles are preferably added to the polyester after completion of the esterification reaction or transesterification reaction.

In addition, there may also be used the method of blending a slurry of the particles prepared by dispersing the particles in ethylene glycol or water with the raw polyester material using a vented kneading extruder, the method of blending the dried particles with the raw polyester material using a kneading extruder, or the like.

Meanwhile, the polyester film used in the present invention may also comprise, in addition to the above particles, conventionally known additives such as an antioxidant, an antistatic agent, a thermal stabilizer, a lubricant, a dye, a pigment, etc., if required.

The thickness of the polyester film used in the present invention is not particularly limited as long as it lies within any suitable range capable of forming a film shape, and is usually in the range of 10 to 200 *µ*m and preferably 25 to 50 *µ*m.

Next, an example of the process of producing the polyester film used in the present invention is more specifically explained, although the present invention is not particularly limited thereto. That is, in the production process, there is preferably used such a method in which the above-mentioned raw polyester material is extruded from a die in the form of a molten sheet, and the molten sheet is cooled and solidified on a chilled roll to obtain an undrawn sheet. In this case, in order to enhance a flatness of the sheet, it is preferred to enhance adhesion between the sheet and a rotary chilled drum. For this purpose, an electrostatic pinning method and/or a liquid coating adhesion method are preferably used. Next, the thus obtained undrawn sheet is biaxially drawn. In such a case, the undrawn sheet is first drawn in one direction thereof using a roll-type or tenter-type drawing machine. The drawing temperature is usually 70 to 120°C and preferably 80 to 110°C, and the draw ratio is usually 2.5 to 7 times and preferably 3 to 6 times. Next, the thus drawn film is drawn in the direction perpendicular to the drawing direction of the first stage. In this case, the drawing temperature is usually 70 to 170°C, and the draw ratio is usually 3 to 7 times and preferably 3.5 to 6 times. Successively, the resulting biaxially drawn sheet is subjected to heat-setting at a temperature of 180 to 270°C under a tension or relaxation within 30% to obtain a biaxially oriented film. Upon the above drawing step, there may also be used the method in which the drawing in each direction is carried out in two or more stages. In such a case, the multi-stage drawing is preferably performed such that the draw ratio in each of the two directions is finally fallen within the above-specified range.

Also, upon producing the polyester film constituting the laminated polyester film according to the present invention, there may also be used a simultaneous biaxial orienting method. The simultaneous biaxial orienting method is such a method in which the above undrawn sheet is drawn and oriented in both of the machine and width directions at the same time while maintaining the sheet in a suitable temperature-controlled condition at a temperature of usually 70 to 120°C and preferably 80 to 110°C. The draw ratio used in the simultaneous biaxial orienting method is 4 to 50 times, preferably 7 to 35 times and more preferably 10 to 25 times in terms of an area ratio of the film. Successively, the obtained biaxially drawn sheet is subjected to heat-setting at a temperature of 170 to 250°C under a tension or relaxation within 30% to obtain a drawn oriented film. As the apparatus used in the above simultaneous biaxial orienting method, there may be employed those drawing machines of any conventionally known type such as a screw type drawing machine, a pantograph type drawing machine and a linear drive type drawing machine.

Next, the method of forming the coating layers constituting the laminated polyester film according to the present invention is explained. The coating layers may be formed by either an in-line coating method in which the surface of the polyester film is subjected to coating treatment during the drawing step of the polyester film, an off-line coating method in which the polyester film produced is once transferred to an outside of the film production system and subjected to coating treatment therein, or combination of these methods. Among these methods, the in-line coating method is preferably used because the coating layers can be formed simultaneously with production of the polyester film and therefore produced at low production costs, and the thicknesses of the coating layers can be varied by controlling a draw ratio of the polyester film.

For example, in the case of a sequential biaxial orienting method, the in-line coating treatment may be carried out, in particular, after completion of the longitudinal drawing but before initiation of the lateral drawing, although not particularly limited thereto. When the coating layers are formed on the polyester film by the in-line coating method, the coating can be carried out simultaneously with formation of the polyester film, and the coating layers can be treated at a high temperature. As a result, it is possible to produce a film suitable as the polyester film used in the present invention.

In the present invention, it is essentially required that the polyester film is provided on one surface thereof with a coating layer formed by applying a coating solution which comprises a hydroxyl group-containing polycarbonate compound and an oxazoline compound onto the surface of the polyester film (hereinafter occasionally referred to merely as a "first coating layer").

The first coating layer is a coating layer for enhancing an adhesion property to various functional layers, for example, may be used for enhancing an adhesion property to various adhesives used for laminating a polarizing film on the laminated polyester film according to the present invention.

The hydroxyl group-containing polycarbonate compound may be produced by reacting a polyhydric alcohol and a carbonate compound.

Examples of the polyhydric alcohol include an aliphatic polyhydric alcohol, a alicyclic polyhydric alcohol and an aromatic polyhydric alcohol. Among these polyhydric alcohols, from the standpoint of a high adhesion property, aliphatic or alicyclic diols are preferred.

The aliphatic or alicyclic diols are not particularly limited. Typical examples of the aliphatic or alicyclic diols include ethylene glycol, 1,2-propanediol, 1,3-propanediol, 1,2-butanediol, 1,3-butanediol, 1,4-butanediol, 2,3-butanediol, neopentyl glycol, 1,5-pentanediol, 1,6-hexanediol, 2,5-hexanediol, 1,7-heptanediol, 1,8-octanediol, 2-ethyl-1,6-hexanediol, 3-methyl-1,5-pentanediol, 1,3-cyclohexanediol, 1,4-cyclohexanediol, 2,2-bis(4-hydroxycyclohexyl)-propane, 1,4-dimethylol cyclohexane, dipropylene glycol, polytetramethylene glycol, 2,6'-dihydroxyethyl hexyl ether, 2,4'-dihydroxyethyl butyl ether, 2,5'-dihydroxyethyl pentyl ether and 2,3'-dihydroxy-2,2'-dimethyl propyl ether. Among these aliphatic or alicyclic diols, preferred are aliphatic diols having 4 to 8 carbon atoms. Examples of the aliphatic diols having 4 to 8 carbon atoms include 1,4-butanediol, 1,5-pentanediol, 1,6-hexanediol, 1,7-heptanediol, 1,8-octanediol and isomers of these diols. There may be used one or more diols selected from the above-mentioned diols. Further, there are more preferably used copolymers of 1,4-butanediol and other aliphatic diols having 5 to 8 carbon atoms.

The number-average molecular weight of the hydroxyl group-containing polycarbonate compound is usually in the range of 500 to 20000, preferably 1000 to 3000 and more preferably 1500 to 2500. When the number-average molecular weight of the hydroxyl group-containing polycarbonate compound is less than 500, the resulting coating solution tends to exhibit no film-forming property. When the number-average molecular weight of the hydroxyl group-containing polycarbonate compound is more than 20000, the terminal hydroxyl value of the compound tends to be reduced, so that the resulting coating layer tends to hardly exhibit a good adhesion property.

The oxazoline compound is a compound having an oxazoline group in a molecule thereof. Especially preferred is a polymer having an oxazoline group which may be in the form of a homopolymer of an addition-polymerizable oxazoline group-containing monomer or a copolymer of the addition-polymerizable oxazoline group-containing monomer with the other monomer. Examples of the addition-polymerizable oxazoline group-containing monomer include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline and 2-isopropenyl-5-ethyl-2-oxazoline. These oxazoline compounds may be used alone or in the form of a mixture of any two or more thereof. Among these oxazoline compounds, 2-isopropenyl-2-oxazoline is more preferred because of good industrial availability thereof. The other monomers used in the copolymer are not particularly limited as long as they are copolymerizable with the addition-polymerizable oxazoline group-containing monomer. Examples of the other monomers include (meth)acrylic acid esters such as alkyl (meth)acrylates (in which the alkyl group may be methyl, ethyl, n-propyl, isopropyl, n-butyl, isobutyl, t-butyl, 2-ethylhexyl or cyclohexyl); unsaturated carboxylic acids such as acrylic acid, methacrylic acid, itaconic acid, maleic acid, fumaric acid, crotonic acid, styrenesulfonic acid and salts of these acids (such as sodium salts, potassium salts, ammonium salts and tertiary amine salts); unsaturated nitriles such as acrylonitrile and methacrylonitrile; unsaturated amides such as (meth)acrylamide, N-alkyl (meth)acrylamide and N,N-dialkyl (meth)acrylamide (in which the alkyl group may be methyl, ethyl, n-propyl, isopropyl, n-butyl, isobutyl, t-butyl, 2-ethylhexyl or cyclohexyl); vinyl esters such as vinyl acetate and vinyl propionate; vinyl ethers such as methyl vinyl ether and ethyl vinyl ether; α-olefins such as ethylene and propylene; halogen-containing α,β-unsaturated monomers such as vinyl chloride, vinylidene chloride and vinyl fluoride; and α,β-unsaturated aromatic monomers such as styrene and α-methyl styrene. These other monomers may be used alone or in combination of any two or more thereof.

The content of the hydroxyl group-containing polycarbonate compound in the coating solution is usually 10 to 90% by weight, preferably 20 to 80% by weight and more preferably 30 to 50% by weight based on a total weight of whole nonvolatile components in the coating solution. When the content of the hydroxyl group-containing polycarbonate compound in the coating solution is less than 10% by weight, it may be difficult to attain a sufficient adhesion of the resulting coating layer to the polyester film or the adhesive layer owing to a less content of the hydroxyl group-containing polycarbonate compound component therein. When the content of the hydroxyl group-containing polycarbonate compound in the coating solution is more than 90% by weight, it may also be difficult to attain a sufficient adhesion of the resulting coating layer to the polyester film or the adhesive layer owing to a less content of the other components therein.

The content of the oxazoline compound in the coating solution is usually 10 to 90% by weight, preferably 20 to 60% by weight and more preferably 25 to 40% by weight based on a total weight of whole nonvolatile components in the coating solution. When the content of the oxazoline compound in the coating solution is less than 10% by weight, the resulting coating layer tends to become brittle owing to a less content of the crosslinking component therein, and therefore tends to be deteriorated in wet-heat resistance. When the content of the oxazoline compound in the coating solution is more than 90% by weight, it may also be difficult to attain a sufficient adhesion of the resulting coating layer to the polyester film or the adhesive layer owing to a less content of the other components therein.

In the first coating layer of the film according to the present invention, in order to improve surface properties of the coating layer and improve a transparency of the resulting film, other polymers than the above hydroxyl group-containing polycarbonate compound may be used in combination therewith.

Specific examples of the above polymers include polyester resins, urethane resins, acrylic resins, polyalkylene glycols, polyalkylene imines, methyl cellulose, hydroxy cellulose, starches, etc. Among these polymers, polyester resins are preferably used from the standpoint of allowing the coating layer to exhibit a good adhesion property to various layers.

The polyester resins may be mainly constituted, for example, from the following polycarboxylic acid and polyhydroxy compound. Examples of the polycarboxylic acid include terephthalic acid, isophthalic acid, orthophthalic acid, phthalic acid, 4,4'-diphenyldicarboxylic acid, 2,5-naphthalenedicarboxylic acid, 1,5-naphthalenedicarboxylic acid, 2,6-naphthalenedicarboxylic acid, 2,7-naphthalenedicarboxylic acid, 1,4-cyclohexanedicarboxylic acid, 2-sodium sulfo-terephthalic acid, 2-potassium sulfo-terephthalic acid, 4-sodium sulfo-isophthalic acid, 4-potassium sulfo-isophthalic acid, 5-sodium sulfo-isophthalic acid, 5-potassium sulfo-isophthalic acid, adipic acid, azelaic acid, sebacic acid, dodecanedicarboxylic acid, glutaric acid, succinic acid, trimellitic acid, trimesic acid, pyromellitic acid, trimellitic anhydride, pyromellitic anhydride, phthalic anhydride, p-hydroxybenzoic acid, a trimellitic acid monopotassium salt, and ester-forming derivatives thereof. Examples of the polyhydroxy compound include ethylene glycol, 1,2-propylene glycol, 1,3-propylene glycol, 1,3-propanediol, 1,4-butanediol, 1,6-hexanediol, 2-methyl-1,5-pentanediol, neopentyl glycol, 1,4-cyclohexane dimethanol, p-xylylene glycol, a bisphenol A-ethylene glycol adduct, diethylene glycol, triethylene glycol, polyethylene glycol, polypropylene glycol, polytetramethylene glycol, polytetramethyleneoxide glycol, dimethylolpropionic acid, glycerol, trimethylol propane, sodium dimethylol ethyl sulfonate, potassium dimethylol ethyl sulfonate, potassium dimethylol propionate or the like. The polyester resins may be synthesized by respectively selecting at least one polycarboxylic acid and at least one polyhydric compound and subjecting these compounds to polycondensation reaction by an ordinary method.

The content of the other polymers such as polyester resins in the coating solution is usually not more than 80% by weight, preferably not more than 60% by weight and more preferably 20 to 40% by weight based on a total weight of whole nonvolatile components in the coating solution. When the content of the other polymers in the coating solution is more than 80% by weight, it may be difficult to attain a sufficient adhesion of the resulting coating layer to the polyester film or the adhesive layer owing to a less content of the other components therein.

Further, in the first coating layer, the above components may be used in combination with a crosslinking agent other than the oxazoline compound unless the subject matter of the present invention is adversely affected. As the crosslinking agent, there may be used various conventionally known resins. Examples of the crosslinking agent include melamine compounds, epoxy compounds, isocyanate compounds and carbodiimide compounds.

The melamine compounds are those compounds having a melamine skeleton therein. Examples of the melamine compounds include alkylolated melamine derivatives, partially or completely etherified compounds obtained by reacting the alkylolated melamine derivative with an alcohol, and a mixture of these compounds. Examples of the alcohol suitably used for the above etherification include methyl alcohol, ethyl alcohol, isopropyl alcohol, n-butanol and isobutanol. The melamine compound may be either a monomer or a dimer or higher polymer, or may be in the form of a mixture thereof. In addition, there may also be used those compounds obtained by co-condensing a urea or the like with a part of melamine. Further, a catalyst may also be used to enhance a reactivity of the melamine compound.

Examples of the epoxy compound include compounds having an epoxy group in a molecule thereof, and prepolymers and cured products of the compounds. Examples of the epoxy compound include condensates of epichlorohydrin with a hydroxyl group of ethylene glycol, polyethylene glycol, glycerol, polyglycerol, bisphenol A, etc., or with an amino group. Specific examples of the epoxy compound include polyepoxy compounds, diepoxy compounds, monoepoxy compounds and glycidyl amine compounds. Examples of the polyepoxy compounds include sorbitol, polyglycidyl ether, polyglycerol polyglycidyl ether, pentaerythritol polyglycidyl ether, diglycerol polyglycidyl ether, triglycidyl tris(2-hydroxyethyl)isocyanate, glycerol polyglycidyl ether and trimethylolpropane polyglycidyl ether. Examples of the diepoxy compounds include neopentyl glycol diglycidyl ether, 1,6-hexanediol diglycidyl ether, resorcin diglycidyl ether, ethylene glycol diglycidyl ether, polyethylene glycol diglycidyl ether, propylene glycol diglycidyl ether, polypropylene glycol diglycidyl ether and polytetramethylene glycol diglycidyl ether. Examples of the monoepoxy compounds include allyl glycidyl ether, 2-ethylhexyl glycidyl ether and phenyl glycidyl ether. Examples of the glycidyl amine compounds include N,N,N',N'-tetraglycidyl-m-xylylenediamine and 1,3-bis(N,N-diglycidylamino)cyclohexane.

Examples of the isocyanate compound include those compounds having an isocyanate group in a molecule thereof. Specific examples of the isocyanate compound include hexamethylene diisocyanate, trimethyl hexamethylene diisocyanate, cyclohexylene diisocyanate, xylylene diisocyanate, isophorone diisocyanate, naphthalene diisocyanate, tolylene diisocyanate, and blocked products or derivatives of these compounds.

In addition, for the purposes of improving an anti-blocking property and a slip property of the coating layer, the first coating layer may also comprise particles. Examples of the particles used in the first coating layer include inorganic particles such as particles of silica, alumina and metal oxides, and organic particles such as crosslinked polymer particles.

In addition, the polyester film used in the present invention is preferably provided, on a surface thereof which is opposite to its surface where the first coating layer is formed, with a coating layer formed by applying a coating solution comprising at least one resin selected from the group consisting of a polyester resin, an acrylic resin and a urethane resin onto the opposite surface of the polyester film (hereinafter occasionally referred to as a "second coating layer").

The second coating layer used in the present invention is provided to enhance an adhesion property to various surface functional layers. When used as a protective film for protecting a front surface of the front side polarizing plate, the second coating layer is a coating layer capable of effectively forming a hard coat layer, an anti-glare layer or the like on the side of a front surface of the polyester film (opposite to the side onto which the polarizing film is attached).

As the polyester resin to be incorporated in the second coating layer, there may be used the same various polyester resins as explained for the first coating layer.

The acrylic resin to be incorporated in the second coating layer may be in the form of a polymer obtained from a polymerizable monomer having a carbon-to-carbon double bond such as, typically, an acrylic monomer and a methacrylic monomer. The polymer may be either a homopolymer or a copolymer. The polymer may also include a copolymer of the polymer with the other polymer (for example, a polyester, a polyurethane, etc). Examples of the copolymer include a block copolymer and a graft copolymer. In addition, the polymer may also include a polymer obtained by polymerizing the polymerizable monomer having a carbon-to-carbon double bond in a polyester solution or a polyester dispersion (which may also be in the form of a mixture of the polymers). Further, the polymer may also include a polymer obtained by polymerizing the polymerizable monomer having a carbon-to-carbon double bond in a polyurethane solution or a polyurethane dispersion (which may also be in the form of a mixture of the polymers). Similarly, the polymer may also include a polymer obtained by polymerizing the polymerizable monomer having a carbon-to-carbon double bond in the other polymer solution or the other polymer dispersion (which may also be in the form of a mixture of the polymers). Further, in order to further enhance an adhesion property, the acrylic resin used in the second coating layer may also comprise a hydroxyl group.

The above polymerizable monomer having a carbon-to-carbon double bond is not particularly limited. Examples of the typical compounds as the polymerizable monomer include various carboxyl group-containing monomers such as acrylic acid, methacrylic acid, crotonic acid, itaconic acid, fumaric acid, maleic acid and citraconic acid, and salts thereof; various hydroxyl group-containing monomers such as 2-hydroxyethyl (meth)acrylate, 2-hydroxypropyl (meth)acrylate, 4-hydroxybutyl (meth)acrylate, monobutylhydroxy fumarate and monobutylhydroxy itaconate; various (meth)acrylic acid esters such as methyl (meth)acrylate, ethyl (meth)acrylate, propyl (meth)acrylate, butyl (meth)acrylate and lauryl (meth)acrylate; various nitrogen-containing compounds such as (meth)acrylamide, diacetone acrylamide, N-methylol acrylamide and (meth)acrylonitrile; various styrene derivatives such as styrene, α-methyl styrene, divinyl benzene and vinyl toluene; various vinyl esters such as vinyl propionate; various silicon-containing polymerizable monomers such as γ-methacryloxypropyl trimethoxysilane and vinyl trimethoxysilane; various phosphorus-containing vinyl-based monomers; various halogenated vinyl compounds such as vinyl chloride and vinylidene chloride; and various conjugated dienes such as butadiene.

The urethane resin to be incorporated in the second coating layer is a high-molecular compound having a urethane bond in a molecule thereof. The urethane resin may be usually produced by the reaction between a polyol and an isocyanate. Examples of the polyol include polycarbonate polyols, polyester polyols, polyether polyols, polyolefin polyols and acrylic polyols. These compounds may be used alone or in combination of any two or more thereof.

The polycarbonate polyols are obtained from a polyhydric alcohol and a carbonate compound by dealcoholization reaction therebetween. Examples of the polyhydric alcohol include ethylene glycol, 1,2-propylene glycol, 1,3-propylene glycol, 1,2- butanediol, 1,3-butanediol, 1,4-butanediol, 1,5-pentanediol, 1,6-hexanediol, 1,4-cyclohexanediol, 1,4-cyclohexanedimethanol, 1,7-heptanediol, 1,8-octanediol, 1,9-nonanediol, 1,10-decanediol, neopentyl glycol, 3-methyl-1,5-pentanediol and 3,3-dimethylol heptane. Examples of the carbonate compound include dimethyl carbonate, diethyl carbonate, diphenyl carbonate and ethylene carbonate. Examples of the polycarbonate-based polyols obtained by the reaction between these compounds include poly(1,6-hexylene)carbonate and poly(3-methyl-1,5-pentylene)carbonate.

Examples of the polyester polyols include those produced by reacting a polycarboxylic acid (such as malonic acid, succinic acid, glutaric acid, adipic acid, pimelic acid, suberic acid, sebacic acid, fumaric acid, maleic acid, terephthalic acid and isophthalic acid) or an acid anhydride thereof with a polyhydric alcohol (such as ethylene glycol, diethylene glycol, triethylene glycol, propylene glycol, dipropylene glycol, tripropylene glycol, butanediol, 1,3-butanediol, 1,4-butanediol, 2,3-butanediol, 2-methyl-1,3-propanediol, 1,5-pentanediol, neopentyl glycol, 1,6-hexanediol, 3-methyl-1,5-pentanediol, 2-methyl-2,4-pentanediol, 2-methyl-2-propyl-1,3-propanediol, 1,8-octanediol, 2,2,4-trimethyl-1,3-pentanediol, 2-ethyl-1,3-hexanediol, 2,5-dimethyl-2,5-hexanediol, 1,9-nonanediol, 2-methyl-1,8-octanediol, 2-butyl-2-ethyl-1,3-propanediol, 2-butyl-2-hexyl-1,3-propanediol, cyclohexanediol, bishydroxymethylcyclohexane, dimethanol benzene, bishydroxyethoxybenzene, alkyl dialkanol amines and lactonediol).

Examples of the polyether polyols include polyethylene glycol, polypropylene glycol, polyethylene/propylene glycol, polytetramethylene ether glycol and polyhexamethylene ether glycol.

Examples of the polyisocyanate compound used for obtaining the urethane resin include aromatic diisocyanates such as tolylene diisocyanate, xylylene diisocyanate, methylene diphenyl diisocyanate, phenylene diisocyanate, naphthalene diisocyanate and tolidine diisocyanate; aromatic ring-containing aliphatic diisocyanates such as α,α,α',α'-tetramethyl xylylene diisocyanate; aliphatic diisocyanates such as methylene diisocyanate, propylene diisocyanate, lysine diisocyanate, trimethyl hexamethylene diisocyanate and hexamethylene diisocyanate; and alicyclic diisocyanates such as cyclohexane diisocyanate, methyl cyclohexane diisocyanate, isophorone diisocyanate, dicyclohexylmethane diisocyanate and isopropylidene dicyclohexyl diisocyanate. These polyisocyanate compounds may be used alone or in combination of any two or more thereof.

When the urethane resin is synthesized, there may be used a chain extender. The chain extender is not particularly limited as long as it has two or more active groups capable of reacting with an isocyanate group. In general, there may be mainly used such a chain extender having two hydroxyl groups or two amino groups.

Examples of the chain extender having two hydroxyl groups include glycols, e.g., aliphatic glycols such as ethylene glycol, propylene glycol and butanediol; aromatic glycols such as xylylene glycol and bishydroxyethoxybenzene; and ester glycols such as neopentyl glycol hydroxypivalate. Examples of the chain extender having two amino groups include aromatic diamines such as tolylenediamine, xylylenediamine and diphenylmethanediamine; aliphatic diamines such as ethylenediamine, propylenediamine, hexanediamine, 2,2-dimethyl-1,3-propanediamine, 2-methyl-1,5-pentanediamine, trimethyl hexanediamine, 2-butyl-2-ethyl-1,5-pentanediamine, 1,8-octanediamine, 1,9-nonanediamine and 1,10-decanediamine; and alicyclic diamines such as 1-amino-3-aminomethyl-3,5,5-trimethyl cyclohexane, dicyclohexylmethanediamine, isopropylidenecyclohexyl-4,4'-diamine, 1,4-diaminocyclohexane and 1,3-bisaminomethyl cyclohexane.

The urethane resin used in the present invention may be dispersed or dissolved in a solvent as a medium, and is preferably dispersed or dissolved in water as the medium. In order to disperse or dissolve the urethane resin in water, there may be used those urethane resins of a forcibly emulsifiable type which can be dispersed and dissolved using an emulsifier, or those urethane resins of a self-emulsifiable type or a water-soluble type which are obtained by introducing a hydrophilic group into urethane resins, etc. Among these urethane resins, in particular, self-emulsifiable type urethane resins which are ionomerized by introducing an ionic group into a skeleton of urethane resins are preferred because they are excellent in storage stability of the coating solution as well as water resistance, transparency and adhesion property of the resulting coating layer. Examples of the ionic group to be introduced into the urethane resins include various groups such as a carboxyl group, a sulfonic acid group, a phosphoric acid group, a phosphonic acid group and a quaternary ammonium salt group. Among these ionic groups, preferred is a carboxyl group. As the method of introducing a carboxyl group into the urethane resin, there may be used various methods which may be carried out in respective stages of the polymerization reaction. For example, there may be used the method in which a carboxyl group-containing resin is used as a comonomer component upon synthesis of a prepolymer, or the method in which a carboxyl group-containing component is used as one component of any of the polyol, the polyisocyanate, the chain extender and the like. In particular, there is preferably used the method in which a carboxyl group-containing diol is used to introduce a desired amount of a carboxyl group into the urethane resins by suitably adjusting an amount of the diol charged. For example, the diol used in the polymerization for production of the urethane resin may be copolymerized with dimethylol propionic acid, dimethylol butanoic acid, bis-(2-hydroxyethyl)propionic acid, bis-(2-hydroxyethyl)butanoic acid, etc. In addition, the carboxyl group thus introduced is preferably formed into a salt thereof by neutralizing the carboxyl group with ammonia, amines, alkali metals, inorganic alkalis, etc. Among these compounds used for the neutralization, especially preferred are ammonia, trimethylamine and triethylamine. When using such a polyurethane resin, the carboxyl group thereof from which the neutralizing agent is removed in the drying step after the coating step may be used as a crosslinking reaction site which can be reacted with other crosslinking agents. As a result, the above-described urethane resin is excellent in stability when preserved in the form of a solution before being coated, and further the coating layer obtained therefrom can be further improved in durability, solvent resistance, water resistance, anti-blocking property, etc.

The content of the polyester resin, acrylic resin or urethane resin which may be incorporated in the second coating layer, in the coating solution is usually in the range of not less than 10% by weight, preferably 30 to 95% by weight and more preferably 40 to 95% by weight based on a total weight of whole nonvolatile components in the coating solution. When the content of the polyester resin, acrylic resin or urethane resin in the coating solution is less than 10% by weight, it may be difficult to attain a sufficient adhesion of the resulting second coating layer to various surface functional layers such as a hard coat layer and an anti-glare layer.

In the second coating layer, in order to improve surface properties of the coating layer and improve a transparency of the resulting film, polymers other than the above polyester resin, acrylic resin or urethane resin may be used in combination therewith.

Specific examples of the polymers include polyalkylene glycols, polyalkylene imines, methyl cellulose, hydroxy cellulose, starches, etc.

In addition, unless the subject matter of the present invention is adversely affected, the second coating layer may also comprise a crosslinking agent. When using the crosslinking agent in the second coating layer, the obtained coating layer can be increased in strength and therefore can be enhanced in wet heat resistance and mar resistance. Examples of the crosslinking agent include melamine compounds, epoxy compounds, oxazoline compounds, isocyanate compounds and carbodiimide-based compounds. These crosslinking agents may be used alone or in the form of a mixture of any two or more thereof. Further, in view of the application to in-line coating, the crosslinking agent preferably exhibits a water solubility or a water dispersibility. The content of the crosslinking agent in the coating solution is usually in the range of 1 to 90% by weight, preferably 3 to 70% by weight and more preferably 5 to 60% by weight based on a total weight of whole nonvolatile components in the coating solution.

In addition, the second coating layer may also comprise particles in order to improve an anti-blocking property and a slipping property of the resulting coating layer. Examples of the particles which may be incorporated in the second coating layer include inorganic particles such as particles of silica, alumina, metal oxides and the like, and organic particles such as crosslinked polymer particles. The content of the particles in the coating solution is usually in the range of 0.01 to 10% by weight, preferably 0.1 to 8% by weight and more preferably 1 to 7% by weight based on a total weight of whole nonvolatile components in the coating solution.

Further, in the second coating layer, there may be used a material capable of controlling a refractive index of the coating layer in order to prevent occurrence of interference fringe owing to external light when forming a clear surface functional layer such as a hard coat layer thereon. The material capable of controlling a refractive index of the second coating layer which may be used in the present invention is specifically a high-refractive index material. Examples of the high-refractive index material include metal compounds, aromatic ring-containing organic compounds, a sulfur atom, a bromine atom, etc. The content of the above material in the coating solution is usually in the range of 1 to 80% by weight, preferably 3 to 60% by weight and more preferably 5 to 40% by weight based on a total weight of whole nonvolatile components in the coating solution.

Specific examples of the metal compounds include metal oxides such as titanium oxide, zinc oxide, tin oxide, antimony oxide, yttrium oxide, zirconium oxide, indium oxide, cerium oxide, ATO (antimony tin oxide) and ITO (indium tin oxide), and metal element-containing organic compounds, e.g., aluminum compounds such as aluminum acetyl acetonate, hydroxy aluminum diacetate and dihydroxy aluminum acetate; titanium compounds such as tetra-n-butyl titanate, tetraisopropyl titanate, a butyl titanate dimer, tetra(2-ethylhexyl)titanate, tetramethyl titanate, titanium acetyl acetonate, titanium tetraacetyl acetonate, poly(titanium acetyl acetonate), titanium octylene glycolate, titanium lactate, titanium triethanol aminate and titanium ethyl acetoacetate; iron compounds such as iron acetyl acetonate and iron acetate; cobalt compounds such as cobalt acetyl acetonate; copper compounds such as copper acetate, copper acetate monohydrate, copper acetate multi-hydrate and copper acetyl acetonate; zinc compounds such as zinc acetate, zinc acetate dihydrate and zinc acetyl acetonate hydrate; and zirconium compounds such as zirconium acetate, zirconium n-propylate, zirconium n-butyrate, zirconium tetraacetyl acetonate, zirconium monoacetyl acetonate and zirconium bis(acetyl acetonate). These metal compounds may be used alone or in combination of any two or more thereof.

Among the above metal compounds, from the viewpoints of a good coatability and a good transparency, especially preferred are the organic compounds comprising a titanium element or a zirconium element. In view of application to the in-line coating method, there are more preferably used water-soluble titanium chelate compounds, water-soluble zirconium chelate compounds and the like.

Examples of the aromatic ring-containing organic compounds include condensed polycyclic ring-containing aromatic compounds such as, for example, those compounds comprising a naphthalene ring or an anthracene ring, those compounds comprising a high benzene ring content such as bisphenol A compounds, biphenyl compounds and fluorene compounds, aromatic ring-containing imide compounds, ultraviolet absorber-containing compounds such as benzophenone-based compounds and benzotriazole-based compounds, and various hetero-aromatic ring-containing compounds. These aromatic ring-containing organic compounds may be used alone or in combination of any two or more thereof. The use of the aromatic compounds is advantageous because they can be incorporated into the polyester resin, acrylic resin or urethane resin contained in the second coating layer. Among these resins, the polyester resins can be readily added with a larger amount of the aromatic compounds in view of their structure. Further, among the aromatic compounds, the naphthalene ring-containing compounds or bisphenol A compounds are more effective because they are capable of efficiently enhancing a refractive index of the coating layer. In addition, the melamine compounds which may be used as a crosslinking agent are compounds having a high hetero-aromatic ring content, and therefore effective to enhance a refractive index of the coating layer.

Further, the first and second coating layers may also respectively comprise various additives such as a defoaming agent, a coatability improver, a thickening agent, an organic lubricant, an antistatic agent, an ultraviolet absorber, an antioxidant, a foaming agent and a dye, if required, unless the subject matter of the present invention is adversely affected.

The analysis of the respective components compounded in the coating layers may be conducted, for example, by surface analysis such as TOF-SIMS.

When forming the respective coating layers by in-line coating, the laminated polyester film is preferably produced by the method in which a coating solution comprising a series of the above-mentioned compounds at a concentration of about 0.1 to about 50% by weight in terms of a solid content thereof is prepared, and the thus prepared coating solution is applied onto the polyester film.

The thicknesses of the first coating layer and the second coating layer in the laminated polyester film according to the present invention are respectively usually in the range of 0.002 to 1.0 *µ*m, preferably 0.02 to 0.5 *µ*m and more preferably 0.03 to 0.2 *µ*m. When the thickness of each of the first coating layer and the second coating layer is less than 0.002 *µ*m, the resulting coating layers may fail to exhibit a sufficient adhesion property. When the thickness of each of the first coating layer and the second coating layer is more than 1.0 *µ*m, the resulting coating layers tends to be deteriorated in appearance and transparency, and the obtained film tends to be deteriorated in anti-blocking property.

In the present invention, as the method of forming the respective coating layers, there may be used conventionally known coating methods such as a reverse gravure coating method, a direct gravure coating method, a roll coating method, a die coating method, a bar coating method and a curtain coating method which are described, for example, in Yuji HARAZAKI, "Coating Methods", Maki-shoten, 1979.

In the present invention, the drying and curing conditions used upon forming the coating layers on the polyester film are not particularly limited. For example, in the case where the coating layers are formed by an off-line coating method, the coating layers may be subjected to heat-setting usually at a temperature of 80 to 200°C for 3 to 40 sec and preferably at a temperature of 100 to 180°C for 3 to 40 sec.

On the other hand, in the case where the coating layers are formed by an in-line coating method, the coating layers may be subjected to heat-setting usually at a temperature of 70 to 280°C for 3 to 200 sec.

In any of the off-line coating and in-line coating methods, the heat-setting may be used in combination with irradiation with active energy rays such as irradiation with ultraviolet rays, if required. The polyester film constituting the laminated polyester film of the present invention may be previously subjected to surface treatments such as corona treatment and plasma treatment.

When using the laminated polyester film of the present invention, for example, as a protective film for a polarizing film in a polarizing plate, the polarizing film is generally attached to the side of the first coating layer thereof through an adhesive for adhering the polarizing film thereto. As the adhesive, there may be used the conventionally known adhesives. Examples of the adhesive include polyvinyl alcohol, polyvinyl butyral, acrylic compounds such as poly(butyl acrylate), and epoxy compounds having an alicyclic epoxy group such as, for example, a glycidyl group and an epoxy-cyclohexane group.

Onto the adhesive layer thus formed is attached a polarizing film, for example, a monoaxially oriented polyvinyl alcohol film dyed with iodine, etc. A protective film or a retardation film may be further attached onto the opposite side of the polarizing film to produce a polarizing plate.

In addition, on the side of the second coating layer of the laminated polyester film, there may be usually formed a surface functional layer such as a hard coat layer and an anti-glare layer. The material used for the surface functional layer is not particularly limited. Examples of the material used for the surface functional layer include monofunctional (meth)acrylates, polyfunctional (meth)acrylates, cured products of reactive silicon compounds such as tetraethoxy silane, etc. Among these materials, from the viewpoint of satisfying both of a good productivity and a high hardness, especially preferred are polymeric cured products of compositions comprising ultraviolet-curable polyfunctional (meth)acrylates.

The compositions comprising ultraviolet-curable polyfunctional (meth)acrylates are not particularly limited. As the compositions, there may be used, for example, a mixture of one or more kinds of conventionally known ultraviolet-curable polyfunctional (meth)acrylates, commercially available products marketed as ultraviolet-curable hard coat materials, or these materials further comprising the other components in such a range that the objects of the embodiments of the present invention are not adversely affected.

The ultraviolet-curable polyfunctional (meth)acrylates are not particularly limited. Examples of the ultraviolet-curable polyfunctional (meth)acrylates include (meth)acrylic derivatives of polyfunctional alcohols such as dipentaerythritol hexa(meth)acrylate, tetramethylolmethane tetra(meth)acrylate, tetramethylolmethane tri(meth)acrylate, trimethylolpropane tri(meth)acrylate, 1,6-hexanediol di(meth)acrylate and 1,6-bis(3-acryloyloxy-2-hydroxypropyloxy)hexane; polyethylene glycol di(meth)acrylates; and urethane (meth)acrylates.

The other components which may be compounded in the compositions comprising ultraviolet-curable polyfunctional (meth)acrylates are not particularly limited. Examples of the other components include inorganic or organic fine particles, polymerization initiators, polymerization inhibitors, antioxidants, antistatic agents, dispersants, surfactants, light stabilizers and leveling agents. In addition, when forming the surface functional layer by a wet coating method and then drying the thus formed layer, an optional amount of a solvent may be added thereto.

As the method of forming the surface functional layer, when using the organic materials therefor, there may be employed ordinary wet coating methods such as a roll coating method and a die coating method. The thus formed hard coat layer may be subjected to heating or irradiation with active energy rays such as ultraviolet rays and electron beams, if required, in order to conduct a curing reaction thereof.

When using the laminated polyester film of the present invention for a polarizing plate, the above-mentioned layer configuration is the "surface functional layer/second coating layer/polyester film/first coating later/adhesive/polarizing film/protective film".

### EXAMPLES

The present invention is described in more detail below by Examples. However, these Examples are only illustrative and not intended to limit the present invention thereto. In addition, the measuring and evaluating methods used in the present invention are as follows.

### (1) Method for measuring intrinsic viscosity of polyester:

One gram of a polyester from which the other polymer components incompatible with the polyester and pigments were previously removed was accurately weighed, and mixed with and dissolved in 100 mL of a mixed solvent comprising phenol and tetrachloroethane at a weight ratio of 50/50, and a viscosity of the resulting solution was measured at 30°C.

### (2) Method for measuring average particle diameter (d₅₀: µm):

Using a centrifugal precipitation type particle size distribution measuring apparatus "SA-CP3 Model" manufactured by Shimadzu Corp., the value of a particle size corresponding to a cumulative fraction of 50% (based on the weight) in equivalent spherical distribution of the particles was measured as an average particle diameter of the particles.

### (3) Method of measuring thickness of coating layer:

The surface of the coating layer was dyed with RuO₄ and embedded in an epoxy resin. Thereafter, the resin-embedded coating layer was cut into a piece by an ultrathin sectioning method, and dyed with RuO₄ to observe and measure a cut section of the coating layer using TEM ("H-7650" manufactured by Hitachi High-Technologies Corp.; accelerated voltage: 100 V).

### (4) Method of evaluating adhesion property:

A 5 wt% polyvinyl alcohol aqueous solution having a polymerization degree of 1000 and a saponification degree of 98.5 mol% as an adhesive was applied on the surface of the first coating layer of the laminated polyester film and then dried such that a thickness of the obtained coating layer after dried was 2 *µ*m to form an adhesive layer thereon. The thus formed adhesive layer was attached with a 18 mm-wide tape ("Cellotape (registered trademark) Lpack (registered trademark) LP-18" produced by Nichiban Co., Ltd.). The thus attached tape was rapidly peeled off from the adhesive layer at a peel angle of 180°. Then, the surface of the adhesive layer from which the tape was peeled off was observed to measure an area of the adhesive layer peeled off together with the tape. The evaluation ratings are as follows.
A: Peeled area of the adhesive layer was not more than 5%.
B: Peeled area of the adhesive layer was more than 5% and not more than 20%.
C: Peeled area of the adhesive layer was more than 20% and not more than 50%.
D: Peeled area of the adhesive layer was more than 50%.

### (5) Method of evaluating adhesion property to hard coat layer (HC adhesion property):

A mixed coating solution comprising 85 parts by mass of dipentaerythritol hexaacrylate, 15 parts by mass of 2-hydroxy-3-phenoxypropyl acrylate, 5 parts by mass of a photopolymerization initiator ("IRGACURE 184" (tradename) produced by Ciba Specialty Chemicals Corp.) and 200 parts by mass of methyl ethyl ketone was applied on the surface of the second coating layer of the laminated polyester film and then dried such that a thickness of the obtained coating layer after dried was 5 *µ*m, and thereafter irradiated with ultraviolet rays for curing to form a hard coat layer thereon. The resulting film was allowed to stand under environmental conditions of 60°C and 90% RH for 50 hr. Then, the hard coat layer was subjected to cross-cutting to form 100 (10 x 10) cross-cuts thereon and then attached with a 18 mm-wide tape ("Cellotape (registered trademark) Lpack (registered trademark) LP-18" produced by Nichiban Co., Ltd.). The thus attached tape was rapidly peeled off from the hard coat layer at a peel angle of 180°. Then, the surface of the hard coat layer from which the tape was peeled off was observed to measure an area of the hard coat layer peeled off together with the tape. The evaluation ratings are as follows.
A: Peeled area of the hard coat layer was less than 5%.
B: Peeled area of the hard coat layer was not less than 5% and less than 20%.
C: Peeled area of the hard coat layer was not less than 20%.

### (6) Method of evaluating adhesion property to anti-glare layer (AG adhesion property):

A mixed solution comprising 100 parts by mass of an anti-glare coating solution ("LUCIFRAL (registered trademark) NAG-1000" produced by Nippon Paint Co., Ltd.; solid concentration: 50% by weight) and 70 parts by mass of methyl ethyl ketone was applied on the surface of the second coating layer of the laminated polyester film and then dried such that a thickness of the obtained coating layer after dried was 5 *µ*m, and thereafter irradiated with ultraviolet rays for curing to form an anti-glare layer thereon. The resulting film was allowed to stand under environmental conditions of 60°C and 90% RH for 50 hr. Then, the anti-glare layer was subjected to cross-cutting to form 100 (10 x 10) cross-cuts thereon and then attached with a 18 mm-wide tape ("Cellotape (registered trademark) Lpack (registered trademark) LP-18" produced by Nichiban Co., Ltd.). The thus attached tape was rapidly peeled off from the anti-glare layer at a peel angle of 180°. Then, the surface of the anti-glare layer from which the tape was peeled off was observed to measure an area of the anti-glare layer peeled off together with the tape. The evaluation ratings are as follows.
A: Peeled area of the anti-glare layer was less than 5%.
B: Peeled area of the anti-glare layer was not less than 5% and less than 20%.
C: Peeled area of the anti-glare layer was not less than 20%.

### (7) Measurement of transmittance at wavelength of 380 nm:

Using a spectrophotometer ("UV-3100PC Model" manufactured by Shimadzu Corp.), the light transmittance of the film was continuously measured at a low scanning speed and a sampling pitch of 2 nm in a wavelength range of 300 to 700 nm to detect a light transmittance of the film at a wavelength of 380 nm.

The polyesters used in the respective Examples and Comparative Examples were prepared by the following methods.

### <Method for producing polyester (A)>

One hundred parts by weight of dimethyl terephthalate and 60 parts by weight of ethylene glycol as starting materials were charged together with 0.09 part by weight of magnesium acetate tetrahydrate as a catalyst into a reaction vessel, and the reaction therebetween was initiated at 150°C. The reaction temperature was gradually raised while distilling off methanol as produced, and allowed to reach 230°C after 3 hr. After 4 hr, the transesterification reaction was substantially terminated. Into the obtained reaction mixture were added 0.04 part by weight of ethyl acid phosphate and then 0.04 part by weight of antimony trioxide, followed by subjecting the resulting mixture to polycondensation reaction for 4 hr. More specifically, the reaction temperature was gradually raised from 230°C until reaching 280°C. On the other hand, the reaction pressure was gradually reduced from normal pressure until finally reaching 0.3 mmHg. After initiation of the reaction, the change in agitation power in the reaction vessel was monitored, and the reaction was terminated at the time at which a viscosity of the reaction solution reached the value corresponding to an intrinsic viscosity of 0.63 on the basis of the change in agitation power in the reaction vessel. The resulting polymer was discharged from the reaction vessel under application of a nitrogen pressure thereto, thereby obtaining a polyester (A) having an intrinsic viscosity of 0.63.

### <Method for producing polyester (B)>

The same procedure as defined in the above method for producing the polyester (A) was conducted except that after adding 0.04 part by weight of ethyl acid phosphate, 0.2 part by weight of silica particles having an average particle diameter of 2 *µ*m in the form of a dispersion in ethylene glycol and 0.04 part by weight of antimony trioxide were added, and the reaction was terminated at the time at which a viscosity of the reaction solution reached the value corresponding to an intrinsic viscosity of 0.65, thereby obtaining a polyester (B) having an intrinsic viscosity of 0.65.

### <Method for producing polyester (C)>

The polyester (A) was charged into a vented twin-screw extruder, and 2,2-(1,4-phenylene)bis[4H-3,1-benzoxazin-4-one] ("CYASORB UV-3638" produced by CYTEC INDUSTRIES Inc.; molecular weight: 369; benzoxazinone-based compound) as an ultraviolet absorber was further added thereto such that a concentration of the ultraviolet absorber in the resulting mixture was 10% by weight. The thus obtained mixture was melt-kneaded and extruded to form chips, thereby obtaining an ultraviolet absorber-containing master batch polyester (C). The resulting polyester (C) had an intrinsic viscosity of 0.59.

The examples of the compounds constituting the coating layers are as follows.

### (Examples of compounds)

### •Hydroxyl group-containing carbonate compound: (IA)

Carbonate compound obtained by polymerizing the following composition:
Ethylene carbonate/1,4-butanediol/1,6-hexanediol = 880/810/118 (% by weight); number-average molecular weight: 2000

### •Hydroxyl group-containing carbonate compound: (IB)

Carbonate compound obtained by polymerizing the following composition:
Ethylene carbonate/1,6-hexanediol = 880/1180 (% by weight); number-average molecular weight: 2000

### •Acrylic resin: (II)

Water dispersion of an acrylic resin obtained by polymerizing the following composition:
Emulsion polymer (emulsifier: anionic surfactant) produced from ethyl acrylate/butyl acrylate/methyl methacrylate/N-methylol acrylamide/acrylic acid = 65/21/10/2/2 (% by weight)

### •Urethane resin: (IIIA)

Carboxylic acid water-dispersed type polyester polyurethane resin "HYDRAN AP-40" (produced by DIC Corp.)

### •Urethane: (IIIB)

Water dispersion of a urethane resin which was obtained by neutralizing a prepolymer produced from 400 parts of a polycarbonate polyol having a number-average molecular weight of 2000 which was obtained from 1,6-hexanediol and diethyl carbonate, 10.4 parts of neopentyl glycol, 58.4 parts of isophorone diisocyanate and 74.3 parts of dimethylol butanoic acid, with triethylamine, and then subjecting the neutralized product to chain extension reaction using isophorone diamine.

### •Polyester resin: (IVA)

Water dispersion of a polyester resin obtained by copolymerizing the following composition:
Monomer composition: (acid component) terephthalic acid/isophthalic acid/5-sodium sulfoisophthalic acid//(diol component) ethylene glycol/1,4-butanediol/diethylene glycol = 56/40/4//70/20/10 (mol%)

### •Polyester resin: (IVB)

Water dispersion of a polyester resin comprising a condensed polycyclic ring-containing aromatic compound obtained by copolymerizing the following composition:
Monomer composition: (acid component) 2,6-naphthalenedicarboxylic acid/5-sodium sulfoisophthalic acid//(diol component) ethylene glycol/diethylene glycol = 92/8//80/20 (mol%)

### •Oxazoline compound: (V)

Oxazoline group-containing acrylic polymer "EPOCROSS WS-500" (produced by Nippon Shokubai Co., Ltd.)

### •Epoxy compound: (VIA)

Polyglycerol polyglycidyl ether "DECONAL EX-521" (produced by Nagase Chemtex Co., Ltd.)

### •Melamine compound: (VIB)

Hexamethoxymethyl melamine

### •Particles: (VII)

Silica sol having an average particle diameter of 65 nm

### Example 1:

A mixed raw material obtained by mixing the polyesters (A) and (B) in amounts of 90% and 10%, respectively, as a raw material for outermost layers (surface layers), and a mixed raw material obtained by mixing the polyesters (A) and (C) in amounts of 85% and 15%, respectively, as a raw material for an intermediate layer, were respectively charged into two extruders, melted therein at 285°C, and then co-extruded therefrom on a chilled roll whose surface was controlled to a temperature of 40°C to form a sheet-like material having a two-kind/three-layer structure (surface layer/intermediate layer/surface layer = 1:8:1 as output), followed by cooling and solidifying the thus co-extruded sheet-like material on the chilled roll, thereby obtaining an undrawn sheet. Next, the thus obtained undrawn sheet was drawn utilizing a difference between peripheral speeds of rolls at a temperature of 85°C and a draw ratio of 3.4 times in a longitudinal direction thereof. Thereafter, a coating solution A1 shown in the below-mentioned Table 1 was applied on one surface of the thus obtained longitudinally drawn sheet (formation of a first coating layer), and a coating solution B1 shown in the below-mentioned Table 1 was applied on the opposite surface of the sheet (formation of a second coating layer). Then, the resulting coated sheet was introduced into a tenter where the sheet was drawn at a temperature of 120°C and a draw ratio of 4.3 times in a lateral direction thereof and then subjected to heat-setting at 225°C. Next, the obtained drawn sheet was relaxed by 2% in a lateral direction thereof, thereby obtaining a polyester film having a thickness of 38 *µ*m which was provided on both the surfaces thereof with the first and second coating layers having thicknesses (after dried) of 0.10 *µ*m and 0.10 *µ*m, respectively. As a result of evaluating properties of the thus obtained polyester film, it was confirmed that both the first coating layer and the second coating layer exhibited a good adhesion property. It was also confirmed that the resulting polyester film had a light transmittance of 4% as measured at 380 nm and therefore was capable of well absorbing ultraviolet rays. The properties of the obtained polyester film are shown in Table 2 below.

### Examples 2 to 16:

The same procedure as defined in Example 1 was conducted except that the coating agent composition was changed to those shown in Table 1, thereby obtaining polyester films. The properties of the thus obtained polyester films are shown in Table 2.

### Example 17:

The same procedure as defined in Example 1 was conducted except that a mixed raw material obtained by mixing the polyesters (A) and (B) in amounts of 90% and 10%, respectively, was used as a raw material for outermost layers (surface layers), and a mixed raw material obtained by mixing the polyesters (A) and (C) in amounts of 80% and 20%, respectively, was used as a raw material for an intermediate layer, thereby obtaining a polyester film. The properties of the thus obtained polyester film are shown in Table 2 below. It was also confirmed that the obtained polyester film had a transmittance of 1% as measured at 380 nm and therefore was capable of well absorbing ultraviolet rays.

### Example 18:

The same procedure as defined in Example 1 was conducted except that a mixed raw material obtained by mixing the polyesters (A) and (B) in amounts of 90% and 10%, respectively, was used as a raw material for outermost layers (surface layers), and a mixed raw material obtained by mixing the polyesters (A) and (C) in amounts of 90% and 10%, respectively, was used as a raw material for an intermediate layer, thereby obtaining a polyester film. The properties of the thus obtained polyester film are shown in Table 2 below. It was also confirmed that the obtained polyester film had a transmittance of 9% as measured at 380 nm and therefore was capable of well absorbing ultraviolet rays.

### Example 19:

The same procedure as defined in Example 1 was conducted except that a mixed raw material obtained by mixing the polyesters (A) and (B) in amounts of 90% and 10%, respectively, was used as a raw material for outermost layers (surface layers), and the polyester (A) solely was used as a raw material for an intermediate layer, thereby obtaining a polyester film. The properties of the thus obtained polyester film are shown in Table 2 below.

### Comparative Examples 1 to 5:

The same procedure as defined in Example 1 was conducted except that the coating agent composition was changed to those shown in Table 1, thereby obtaining polyester films. As a result of evaluating properties of the thus obtained laminated polyester films, it was confirmed that the polyester films had a poor adhesion property as shown in Table 2 below.

### Comparative Example 6:

The same procedure as defined in Example 1 was conducted except that no second coating layer was formed, thereby obtaining a polyester film. As a result of evaluating properties of the thus obtained laminated polyester film, it was confirmed that the polyester film had a poor adhesion property to the surface functional layer as shown in Table 2 below.

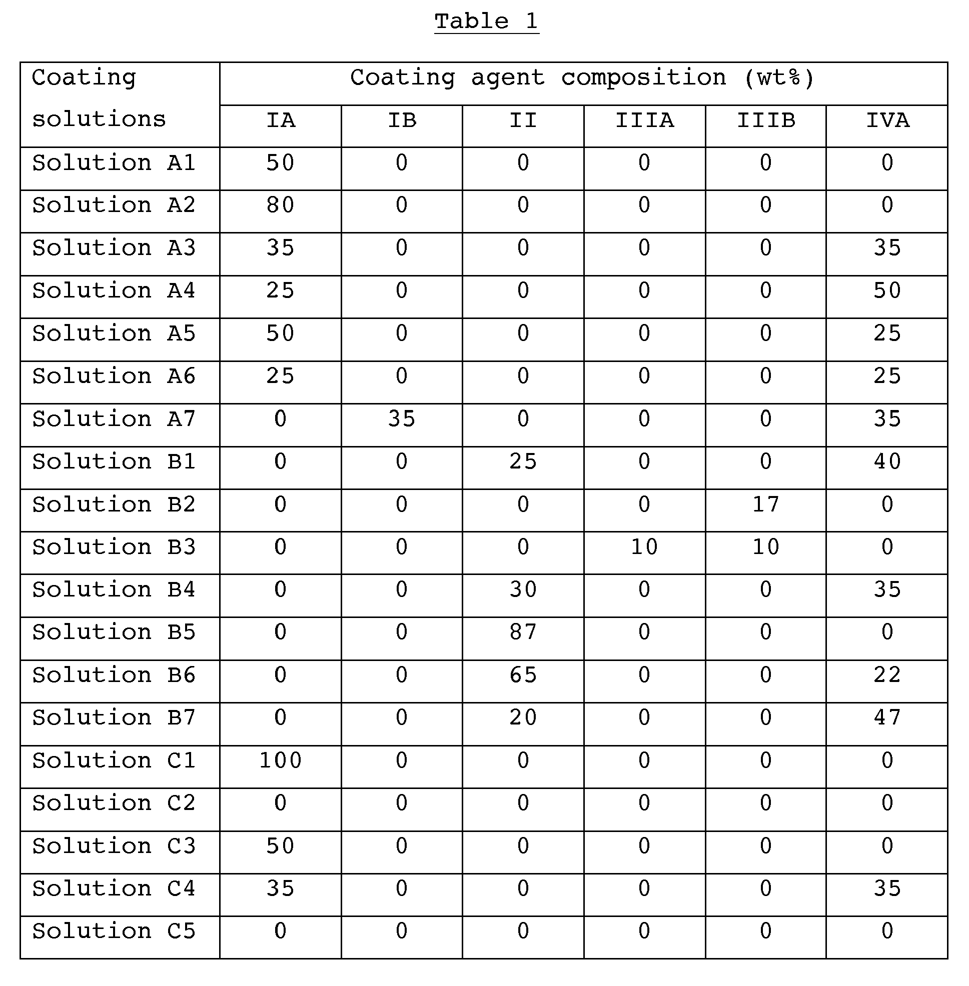

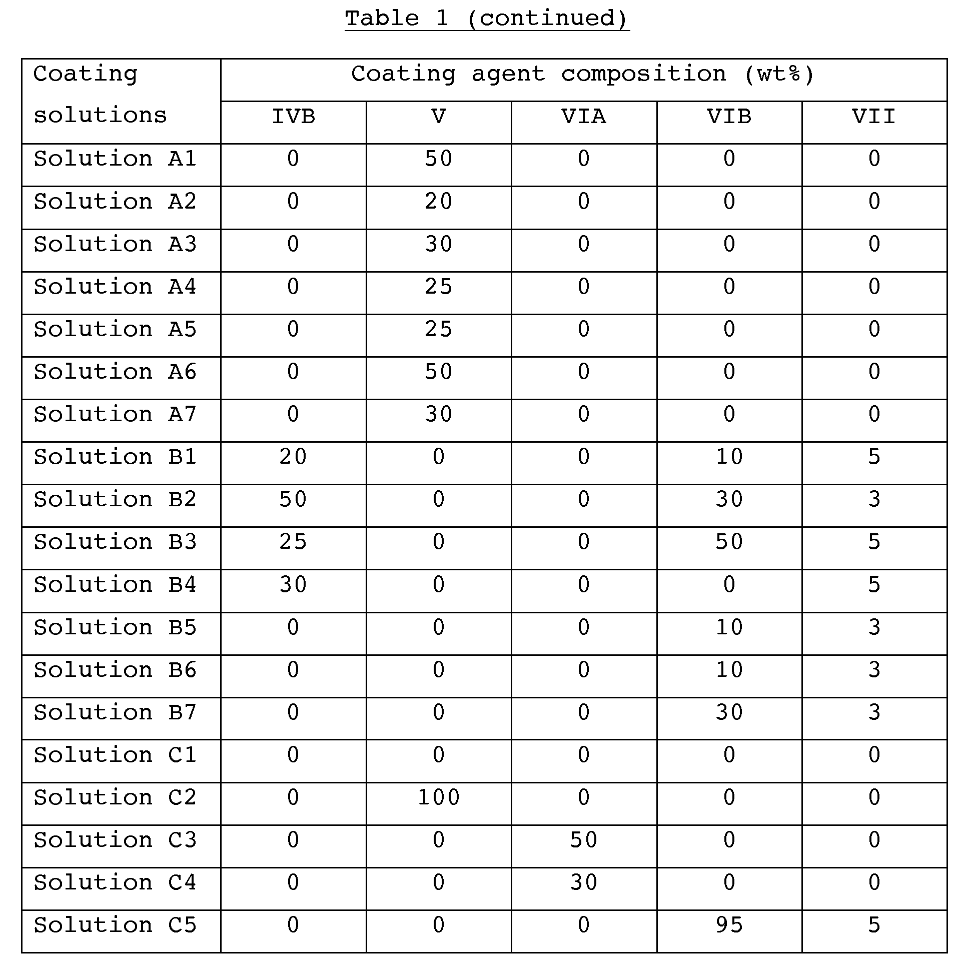

**Table 2**

| Examples and Comparative Examples | First coating layer | | |
|---|---|---|---|
| | Coating solution | Thickness (*µ*m) | Adhesion property |
| Example 1 | A1 | 0.10 | B |
| Example 2 | A2 | 0.10 | B |
| Example 3 | A3 | 0.05 | B |
| Example 4 | A3 | 0.10 | A |
| Example 5 | A4 | 0.10 | B |
| Example 6 | A5 | 0.10 | A |
| Example 7 | A6 | 0.10 | B |
| Example 8 | A7 | 0.10 | B |
| Example 9 | A3 | 0.10 | A |
| Example 10 | A3 | 0.10 | A |
| Example 11 | A3 | 0.10 | A |
| Example 12 | A3 | 0.10 | A |
| Example 13 | A3 | 0.10 | A |
| Example 14 | A3 | 0.10 | A |
| Example 15 | A3 | 0.10 | A |
| Example 16 | A3 | 0.10 | A |
| Example 17 | A3 | 0.10 | A |
| Example 18 | A3 | 0.10 | A |
| Example 19 | A3 | 0.10 | A |
| Comparative Example 1 | C1 | 0.10 | D |
| Comparative Example 2 | C2 | 0.10 | D |
| Comparative Example 3 | C3 | 0.10 | D |
| Comparative Example 4 | C4 | 0.10 | C |
| Comparative Example 5 | A3 | 0.10 | A |
| Comparative Example 6 | A3 | 0.10 | A |

| Examples and Comparative Examples | Second coating layer | | |
|---|---|---|---|
| | Coating solution | Thickness (*µ*m) | HC adhesion property |
| Example 1 | B1 | 0.10 | A |
| Example 2 | B1 | 0.10 | A |
| Example 3 | B1 | 0.10 | A |
| Example 4 | B1 | 0.10 | A |
| Example 5 | B1 | 0.10 | A |
| Example 6 | B1 | 0.10 | A |
| Example 7 | B1 | 0.10 | A |
| Example 8 | B1 | 0.10 | A |
| Example 9 | B1 | 0.05 | A |
| Example 10 | B2 | 0.10 | A |
| Example 11 | B3 | 0.10 | A |
| Example 12 | B4 | 0.13 | A |
| Example 13 | B4 | 0.05 | A |
| Example 14 | B5 | 0.03 | A |
| Example 15 | B6 | 0.05 | A |
| Example 16 | B7 | 0.10 | A |
| Example 17 | B1 | 0.10 | A |
| Example 18 | B1 | 0.10 | A |
| Example 19 | B1 | 0.10 | A |
| Comparative Example 1 | B1 | 0.10 | A |
| Comparative Example 2 | B1 | 0.10 | A |
| Comparative Example 3 | B1 | 0.10 | A |
| Comparative Example 4 | B1 | 0.10 | A |
| Comparative Example 5 | C5 | 0.10 | C |
| Comparative Example 6 | - | - | C |

| Examples and Comparative Examples | Second coating layer | | Transmittance at 380 nm (%) |
|---|---|---|---|
| | AG adhesion property | | |
| Example 1 | A | | 4 |
| Example 2 | A | | 4 |
| Example 3 | A | | 4 |
| Example 4 | A | | 4 |
| Example 5 | A | | 4 |
| Example 6 | A | | 4 |
| Example 7 | A | | 4 |
| Example 8 | A | | 4 |
| Example 9 | A | | 4 |
| Example 10 | A | | 4 |
| Example 11 | A | | 4 |
| Example 12 | A | | 4 |
| Example 13 | A | | 4 |
| Example 14 | A | | 4 |
| Example 15 | A | | 4 |
| Example 16 | A | | 4 |
| Example 17 | A | | 1 |
| Example 18 | A | | 9 |
| Example 19 | A | | 88 |
| Comparative Example 1 | A | | 4 |
| Comparative Example 2 | A | | 4 |
| Comparative Example 3 | A | | 4 |
| Comparative Example 4 | A | | 4 |
| Comparative Example 5 | C | | 4 |
| Comparative Example 6 | C | | 4 |

### INDUSTRIAL APPLICABILITY

The film of the present invention can be suitably used in the applications in which a good adhesion property to various adhesives and a good adhesion property to various surface functional layers are required, for example, such as a protective film for a polarizing film used in liquid crystal displays, in particular, a protective film for a front surface of a front side polarizing plate or the like.

## Claims

1. A laminated polyester film comprising:
a polyester film and
a coating layer formed on one surface of the polyester film which is obtainable by applying a coating solution comprising a hydroxyl group-containing polycarbonate compound, and an oxazoline compound onto the surface of the polyester film, wherein the hydroxyl group-containing polycarbonate compound is produced by reacting a polyhydric alcohol and a carbonate compound.

2. The laminated polyester film according to claim 1, further comprising a coating layer formed on the other surface of the polyester film which is obtainable by applying a coating solution which comprises at least one resin selected from the group consisting of a polyester resin, an acrylic resin and a urethane resin onto the other surface of the polyester film.

3. The laminated polyester film according to claim 1 or 2, wherein contents of the hydroxyl group-containing polycarbonate compound and the oxazoline compound in the coating solution are respectively 10 to 90% by weight based on a total weight of whole nonvolatile components in the coating solution.

4. The laminated polyester film according to any one of claims 2 or 3, wherein a content of the at least one resin selected from the group consisting of a polyester resin, an acrylic resin and a urethane resin in the coating solution is not less than 10% by weight based on a total weight of whole nonvolatile components in the coating solution.

5. The laminated polyester film according to any one of claims 1 to 4, wherein the polyester film comprises an ultraviolet absorber.

## Patentansprüche

1. Laminierter Polyesterfilm, umfassend:
einen Polyesterfilm und
eine auf einer Oberfläche des Polyesterfilms gebildete Überzugsschicht, welche erhältlich ist durch Aufbringen einer Beschichtungslösung, umfassend eine hydroxylgruppenhaltige Polycarbonatverbindung und eine Oxazolinverbindung, auf die Oberfläche des Polyesterfilms, wobei die hydroxylgruppenhaltige Polycarbonatverbindung durch Umsetzen eines mehrwertigen Alkohols und einer Carbonatverbindung hergestellt ist.

2. Laminierter Polyesterfilm nach Anspruch 1, weiterhin umfassend eine auf der anderen Oberfläche des Polyesterfilms gebildete Überzugsschicht, welche erhältlich ist durch Aufbringen einer Beschichtungslösung, die mindestens ein Harz umfasst, gewählt aus der Gruppe, bestehend aus einem Polyesterharz, einem Acrylharz und einem Urethanharz, auf die andere Oberfläche des Polyesterfilms.

3. Laminierter Polyesterfilm nach Anspruch 1 oder 2, wobei Gehalte der hydroxylgruppenhaltigen Polycarbonatverbindung und der Oxazolinverbindung in der Beschichtungslösung jeweils 10 bis 90 Gew.-% betragen, basierend auf einem Gesamtgewicht der gesamten nicht-flüchtigen Komponenten in der Beschichtungslösung.

4. Laminierter Polyesterfilm nach irgendeinem der Ansprüche 2 oder 3, wobei ein Gehalt des mindestens einen Harzes, gewählt aus der Gruppe, bestehend aus einem Polyesterharz, einem Acrylharz und einem Urethanharz, in der Beschichtungslösung nicht weniger als 10 Gew.-% beträgt, basierend auf einem Gesamtgewicht der gesamten nicht-flüchtigen Komponenten in der Beschichtungslösung.

5. Laminierter Polyesterfilm nach irgendeinem der Ansprüche 1 bis 4, wobei der Polyesterfilm einen Ultraviolettabsorber umfasst.

## Revendications

1. Film polyester stratifié comprenant :
un film polyester et
une couche de revêtement formée sur une surface du film polyester qui peut être obtenue en appliquant une solution de revêtement comprenant un composé polycarbonate contenant un groupe hydroxyle, et un composé oxazoline sur la surface du film polyester, le composé polycarbonate contenant un groupe hydroxyle étant produit par réaction d'un alcool polyhydrique et d'un composé carbonate.

2. Film polyester stratifié selon la revendication 1, comprenant en outre une couche de revêtement formée sur l'autre surface du film polyester qui peut être obtenue en appliquant une solution de revêtement qui comprend au moins une résine choisie dans le groupe consistant en une résine de polyester, une résine acrylique et une résine d'uréthane sur l'autre surface du film polyester.

3. Film polyester stratifié selon la revendication 1 ou 2, dans lequel les teneurs en composé polycarbonate contenant des groupes hydroxyle et en composé oxazoline dans la solution de revêtement sont respectivement de 10 à 90 % en poids sur la base d'un poids total de composants non volatils entiers dans la solution de revêtement.

4. Film polyester stratifié selon l'une quelconque des revendications 2 ou 3, dans lequel une teneur d'au moins une résine choisie dans le groupe consistant en une résine de polyester, une résine acrylique et une résine d'uréthane dans la solution de revêtement n'est pas inférieure à 10 % en poids sur la base d'un poids total de composants non volatils entiers dans la solution de revêtement.

5. Film polyester stratifié selon l'une quelconque des revendications 1 à 4, dans lequel le film polyester comprend un absorbeur d'ultraviolets.
